# EUROPEAN PATENT APPLICATION

(11) **EP 4 576 484 A1**
(43) Date of publication of application: **25.06.2025**
(21) Application number: 22956130.3
(22) Date of filing: 26.08.2022
(51) Int. Cl.: H02J 7/00

(54) **CONNECTION CONTROL METHOD AND APPARATUS, COMPUTER DEVICE, AND STORAGE MEDIUM**

(71) Applicant: Contemporary Amperex Future Energy Research Institute (Shanghai) Limited, Shanghai 200241 (CN)
(72) Inventor: LU, Yanhua, Shanghai 200241 (CN); YU, Dongxu, Shanghai 200241 (CN); XU, Xiangxiang, Shanghai 200241 (CN); LIANG, Liliuyuan, Shanghai 200241 (CN); LIANG, Pengfei, Shanghai 200241 (CN)
(74) Representative: Gong, Jinping
(86) International application number: PCT/CN2022/115184
(87) International publication number: WO 2024/040584

(57) **Abstract**

The present application relates to a connection control method and apparatus, a computer device, and a storage medium. The method comprises: acquiring first voltages of battery packs of energy storage modules of an energy storage system; determining, based on the first voltages of the battery packs and a rated voltage value of a power unit of each of the energy storage modules, a charging voltage of each of the power units; and controlling a battery pack of a target energy storage module of the energy storage system to be connected to the energy storage system based on the charging voltage. By using the method, the battery pack can be prevented from being damaged in the connection process of the battery pack.

## Description

### TECHNICAL FIELD

The present application relates to the technical field of electric power, and particularly relates to a method for connection control, an apparatus for connection control, a computer device, and a storage medium.

### BACKGROUND

A high-voltage direct-mounted energy storage system based on application of a modular multi-level cascade technology is increasingly widely used in a power grid. The high-voltage direct-mounted energy storage system is implemented by distributed integration of energy storage units into energy storage modules using the modular multi-level cascade technology, can simultaneously implement AC-DC power conversion and energy storage, and has advantages such as high modularity degree, good harmonic characteristics, and low equivalent switching frequency.

The high-voltage direct-mounted energy storage system comprises a plurality of energy storage modules, and each of the energy storage modules comprises a power unit and an energy storage unit. At present, a process of connecting a battery pack of the high-voltage direct-mounted energy storage system is that: after AC startup or DC startup, when voltage of the power unit of each energy storage module reaches a rated value, and after an operation and maintenance staff manually observes that the energy storage system has no abnormality, the operation and maintenance staff manually issues a connection command to connect a battery pack of the energy storage unit to the high-voltage direct-mounted energy storage system.

However, a current connection mode of the battery pack tends to impact the battery pack and damage the battery pack in the process of connecting the battery pack.

### SUMMARY OF THE INVENTION

On this basis, it is necessary to provide, in response to the above technical problems, a method for connection control, an apparatus for connection control, a computer device, and a storage medium capable of avoiding damaging the battery pack in a process of connecting the battery pack.

In a first aspect, the present application provides a method for connection control. The method includes:
acquiring first voltages of battery packs of energy storage modules of an energy storage system;
determining, based on the first voltages of the battery packs and a rated voltage value of a power unit of each of the energy storage modules, a charging voltage of each of the power units; and
controlling a battery pack of a target energy storage module of the energy storage system to be connected to the energy storage system based on the charging voltage.

In one embodiment thereof, the determining the charging voltage based on the first voltages of the battery packs and the rated voltage value of the power unit of the energy storage module includes:
determining a target voltage value based on the first voltages of the battery packs; and
determining the charging voltage based on the target voltage value and the rated voltage value.

In one embodiment thereof, the determining the target voltage value based on the first voltages of the battery packs includes:
determining an average or minimum value of the first voltages of the battery packs as the target voltage value.

In one embodiment thereof, the determining the charging voltage based on the target voltage value and the rated voltage value includes:
using, in response to the target voltage value being larger than a first preset threshold, the rated voltage value as the charging voltage; the first preset threshold being determined based on the rated voltage value.

In one embodiment thereof, the method further includes:
comparing, in response to the target voltage value being smaller than or equal to the first preset threshold, the target voltage value with a second preset threshold to obtain a comparison result, wherein the second preset threshold is determined based on the rated voltage value of the power unit, and the second preset threshold is smaller than the first preset threshold; and
determining the charging voltage based on the comparison result.

In one embodiment thereof, the determining the charging voltage based on the comparison result includes:
using, in response to the target voltage value being larger than the second preset threshold, the target voltage value as the charging voltage; and
using, in response to the target voltage value being smaller than or equal to the second preset threshold, a maximum value as the charging voltage; the maximum value being the maximum first voltage value among the first voltages of the battery packs.

In one embodiment thereof, the method further includes:
determining the number of to-be-cut-off energy storage modules based on a bus voltage and the charging voltage; and
determining the target energy storage module from the energy storage modules based on the number of to-be-cut-off energy storage modules.

In one embodiment thereof, the controlling the battery pack of the target energy storage module of the energy storage system to be connected to the energy storage system based on the charging voltage includes:
determining a difference value between a current voltage and a charging voltage of a power unit of the target energy storage module; and
controlling the battery pack of the target energy storage module to be connected to the energy storage system based on the difference value.

In one embodiment thereof, the controlling the battery pack of the target energy storage module to be connected to the energy storage system based on the difference value includes:
sending, in response to the difference value being smaller than a third preset threshold, a connection instruction to a control system; the connection instruction being used to instruct the battery pack of the target energy storage module to be connected to the energy storage system.

In one embodiment thereof, the determining the number of to-be-cut-off energy storage modules based on the bus voltage and the charging voltage includes:
determining, in response to receiving a controlled charging instruction sent by the control system, the number of to-be-cut-off energy storage modules based on the bus voltage and the rated voltage value.

In one embodiment thereof, the determining the number of to-be-cut-off energy storage modules based on the bus voltage and the charging voltage includes:
determining a ratio of the bus voltage to the charging voltage; and
determining the number of to-be-cut-off energy storage modules based on a difference value between the total number of energy storage modules of the energy storage system and the ratio.

In a second aspect, the present application further provides an apparatus for connection control. The apparatus comprises:
an acquisition module configured to acquire first voltages of battery packs of energy storage modules of an energy storage system;
a first determination module configured to determine, based on the first voltages of the battery packs and a rated voltage value of a power unit of each of the energy storage modules, a charging voltage of each of the power units; and
a connection module configured to control a battery pack of a target energy storage module of the energy storage system to be connected to the energy storage system based on the charging voltage.

In a third aspect, the present application further provides a computer device. The computer device comprises a memory and a processor, wherein the memory stores a computer program, and the processor, when executing the computer program, implements steps of any one of the above methods.

In a fourth aspect, the present application further provides a computer-readable storage medium. The computer-readable storage medium stores a computer program thereon, wherein the computer program, when executed by a processor, implements steps of any one of the above methods.

In a fifth aspect, the present application further provides a computer program product. The computer program product comprises a computer program, wherein the computer program, when executed by a processor, implements steps of any one of the above methods.

The method for connection control, the apparatus for connection control, the computer device, and the storage medium mentioned above acquire first voltages of battery packs of energy storage modules of an energy storage system; determine, based on the first voltages of the battery packs and a rated voltage value of a power unit of each of the energy storage modules, a charging voltage of each of the power units; and control a battery pack of a target energy storage module of the energy storage system to be connected to the energy storage system based on the charging voltage. In the present application, based on a first voltage of each battery pack and a rated voltage value of a power unit of each energy storage module, a charging voltage of each power unit can be determined, and the first voltage of the battery pack is equivalent to an actual voltage of each battery pack. Therefore, the actual voltage of each battery pack and the rated voltage value of the power unit of each energy storage module are comprehensively considered for the charging voltage of each power unit, and then when a battery pack of a target energy storage module of an energy storage system is controlled to be connected to the energy storage system based on the charging voltage, the actual voltage of each battery pack matches the charging voltage of the power unit of each energy storage module. Therefore, the present application avoids the problem of impacting and damaging the battery pack in a process of connecting the battery pack because the actual voltage of the battery pack mismatches the rated voltage value of the power unit in a current process of connecting the battery pack, and avoids damaging the battery pack in the process of connecting the battery pack.

### DESCRIPTION OF DRAWINGS

FIG. 1 is an application environment diagram of a method for connection control in an embodiment of the present application;
FIG. 2 is a schematic structural diagram of an energy storage module in an embodiment of the present application;
FIG. 3 is a schematic flowchart of a method for connection control in an embodiment of the present application;
FIG. 4 is a schematic flowchart of determining a charging voltage in an embodiment of the present application;
FIG. 5 is a schematic flowchart of determining a charging voltage in an embodiment of the present application;
FIG. 6 is another schematic flowchart of determining a charging voltage in an embodiment of the present application;
FIG. 7 is a schematic flowchart of determining a target energy storage module in an embodiment of the present application;
FIG. 8 is a schematic flowchart of connecting a battery pack in an embodiment of the present application;
FIG. 9 is a schematic flowchart of determining the number of cutoffs in an embodiment of the present application;
FIG. 10 is a schematic diagram of an AC high-voltage direct-mounted energy storage system;
FIG. 11 is a hybrid AC/DC high-voltage direct-mounted energy storage system;
FIG. 12 is a whole schematic flowchart of a method for connection control in the present application;
FIG. 13 is a structural block diagram of an apparatus for connection control in an embodiment of the present application; and
FIG. 14 is an internal structural diagram of a computer device in an embodiment of the present application.

### DETAILED DESCRIPTION

In order to make the objects, technical solutions, and advantages of the present application clearer, the present application will be further described in detail below with reference to the drawings and embodiments. It should be understood that the specific embodiments described herein are merely used to explain the present application, but are not intended to limit the present invention.

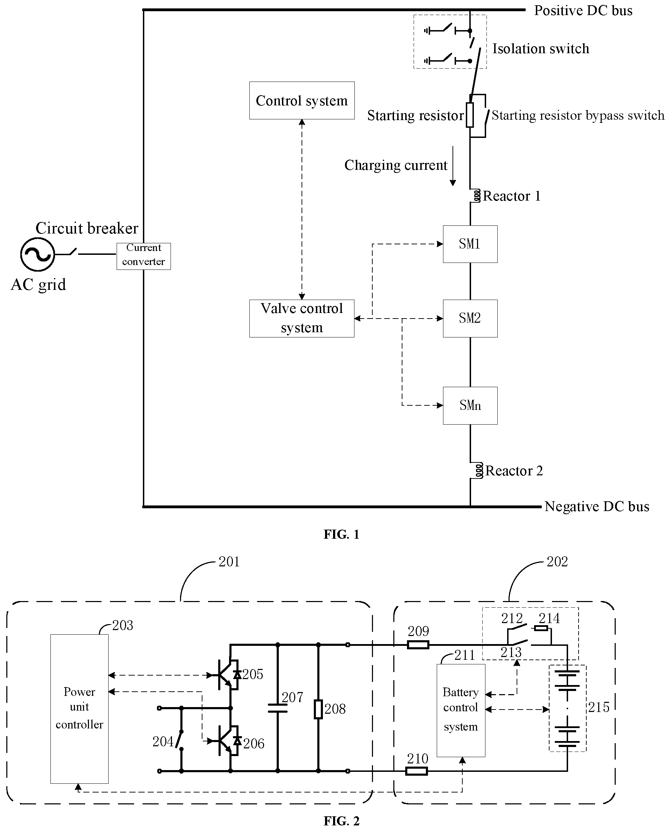

FIG. 1 is an application environment diagram of a method for connection control in an embodiment of the present application. The method for connection control provided in the embodiment of the present application may be applied to a valve control system as shown in FIG. 1. FIG. 1 shows a system architecture diagram of a high-voltage direct-mounted energy storage system, which is referred to as an energy storage system below. As shown in FIG. 1, the energy storage system may be configured in a high-voltage DC transmission line, that is, between a positive DC bus and a negative DC bus. The energy storage system comprises an isolation switch, a starting resistor, a starting resistor bypass switch, a reactor 1, a reactor 2, at least one energy storage module SM, a valve control system, and a control system. n is an integer larger than or equal to 1, a total number n of energy storage modules can be configured based on a voltage level of a power transmission system, and SMₙ denotes an n-th energy storage module.

In order to explain the application environment of the present application more clearly, the description is provided here with reference to FIG. 2. FIG. 2 is a schematic structural diagram of an energy storage module in an embodiment of the present application. As shown in FIG. 2, the energy storage module in FIG. 1, such as SM1, comprises a power unit 201 and an energy storage unit 202. In FIG. 2, the power unit is a half-bridge structure as an example, or the power unit may be a full-bridge or full-bridge-like structure, which is not limited in this embodiment. The power unit 201 comprises a power unit controller 203, a bypass switch 204, a fully controlled switch 205, a fully controlled switch 206, a capacitor 207, a voltage equalizing resistor 208, a contactor 209, a contactor 210, a battery control system 211, a precharging circuit, and a battery pack 215. The precharging circuit comprises an S1 switch 212, an S2 switch 213, and a precharging resistor 214.

In FIG. 1, the isolation switch is configured to control whether the energy storage system is connected to a power transmission line; the starting resistor is configured to reduce an impact current when the energy storage system is connected to the power transmission line; the starting resistor bypass switch is configured to activate a resistor bypass after the energy storage system is stably connected to the power transmission line, to increase charging current; and the reactor 1 and the reactor 2 are configured to inhibit harmonic wave and short-circuit current.

Further, with reference to FIGS. 1 and 2, the control system controls and protects the energy storage system. The control system is communicatively connected with the valve control system, the valve control system is communicatively connected with the power unit controller, and the power unit controller is communicatively connected with the battery control system. When a circuit breaker between an AC grid and a current converter is switched on, the current converter exchanges active power and reactive power with the AC grid.

Specifically, the power unit controller 203 is configured to control and protect various devices of the power unit 201. When the energy storage system fails, the power unit controller 203 controls the bypass switch 204 to be disconnected, thereby bypassing the power unit 201 from the energy storage system. The fully controlled switch 205 and the fully controlled switch 206 are configured to block, switch on, and cut off the power unit 201. When the fully controlled switch 205 and the fully controlled switch 206 are both disconnected, the power unit 201 is blocked; when the fully controlled switch 205 is switched on, and the fully controlled switch 206 is disconnected, the power unit 201 is switched on; and when the fully controlled switch 205 is disconnected and the fully controlled switch 206 is switched on, the power unit 201 is cut off. The capacitor 207 supports and stabilizes voltage of the power unit 201. The voltage equalizing resistor 208 is configured to equalize voltage of the capacitor 207 of the power unit 201. The contactor 209 and the contactor 210 are configured to isolate the energy storage unit 202 from the energy storage system when the energy storage unit 202 fails. The battery control system is configured to control and protect devices of the energy storage unit 202, and equalize and control the battery pack 215 of the energy storage unit 202. The precharging circuit is configured to connect the battery pack 215 of the energy storage unit 202, and control buffering of the battery pack 215 at a moment of connection. The battery pack 215 provides energy support for the energy storage system.

Specifically, with reference to FIGS. 1 and 2, the current connection mode of the battery pack of the energy storage system is that: when the isolation switch is switched on, the power transmission line operates, a power unit of each energy storage module is blocked, and then capacitor voltage of the power unit of each energy storage module reaches a rated voltage value, for example, the capacitor 207 of the SM1 reaches the rated voltage value. Further, after observing that the energy storage system has no abnormality, an operation and maintenance staff of the energy storage system manually issues a connection command, thereby switching on a switch of the precharging circuit to connect the battery pack of the energy storage unit to the energy storage system. For example, after the S1 switch 213 of the SM1 is switched on, the battery pack 215 of the energy storage unit 202 is connected to the energy storage system.

However, in the current connection mode of the battery pack, an actual voltage of the battery pack does not match a rated voltage value of the power unit. For example, the actual voltage of the battery pack is smaller than the rated voltage value of the power unit. If the battery pack is still connected in this case, a voltage difference is generated between the battery pack and the power unit, which tends to impact the battery pack and damage the battery pack in a process of connecting the battery pack.

On this basis, it is necessary to provide, in response to the above technical problems, a method for connection control capable of avoiding damaging the battery pack in the process of connecting the battery pack.

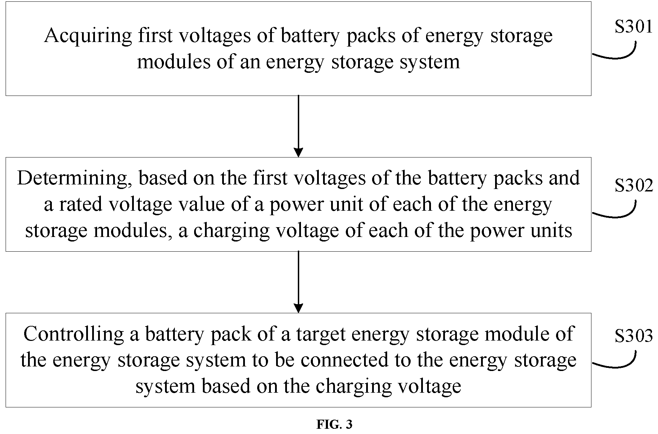

FIG. 3 is a schematic flowchart of a method for connection control in an embodiment of the present application. The method can be applied to the valve control system shown in FIG. 1. In an embodiment, as shown in FIG. 3, the method includes the following steps:
S301: acquiring first voltages of battery packs of energy storage modules of an energy storage system.

In this embodiment, a valve control system acquires the first voltages of the battery packs of the energy storage modules of the energy storage system, wherein the valve control system comprises a Central Processing Unit (CPU), and may further comprise a Digital Signal Processing (DSP), a Field-Programmable Gate Array (FPGA), or other programmable logic devices.

The first voltages are voltages determined based on states of charge (SOC) of the battery packs, and can be understood as actual voltages of the battery packs before they are connected to the energy storage system. Assuming that the energy storage system comprises 10 energy storage modules, the valve control system will acquire first voltages of the 10 battery packs of the 10 energy storage modules.

Taking FIG. 2 as an example, an implementable mode is that the battery control system 211 acquires a first voltage of the battery pack 215, and sends the first voltage to the power unit controller 203. After acquiring the first voltage, the power unit controller 203 forwards the first voltage to the valve control system, and then the valve control system acquires the first voltage of the battery pack 215 of the energy storage module SM1. Similarly, the valve control system can also acquire first voltages of battery packs of other energy storage modules, which will not be repeated here.

Further, after acquiring the first voltages of the battery packs of the energy storage modules of the energy storage system, the valve control system caches the first voltages of the battery packs. After the caching is successful, the valve control system can return an acknowledgment signal to the power unit controller, indicating that the first voltages of the battery packs have been successfully stored.

S302: determining, based on the first voltages of the battery packs and a rated voltage value of a power unit of each of the energy storage modules, a charging voltage of each of the power units.

In this embodiment, the rated voltage values of the power units of the energy storage modules may be identical, and stored in the valve control system. It should be noted that the charging voltage of each power unit is a target charging value of a capacitor of each energy storage unit. The rated voltage value of the power unit of each energy storage module may also be regarded as a rated voltage value of the capacitor of each energy storage unit, for example, a rated voltage value of the capacitor 207 in FIG. 2. In other words, the rated voltage value of each power unit is equal to a rated voltage value of a capacitor of each power unit, and the charging voltage of each power unit is a voltage value that the capacitor of each energy storage unit is expected to reach.

Further, the valve control system determines the charging voltage of each power unit based on the first voltages of the battery packs and the rated voltage value of the power unit of each energy storage module. For example, the valve control system can compare the first voltage of each battery pack with the rated voltage value of the power unit. If a difference value between the first voltage of each battery pack and the rated voltage value of each power unit is larger than a preset difference threshold, the first voltage of each battery pack is used as the charging voltage of each power unit, while if a difference value between the first voltage of each battery pack and the rated voltage value of each power unit is smaller than or equal to the preset difference threshold, the rated voltage value of each power unit is still used as the charging voltage of each power unit, which is not limited in embodiments of the present application.

S303: controlling a battery pack of a target energy storage module of the energy storage system to be connected to the energy storage system based on the charging voltage.

In this embodiment, with reference to FIG. 1, the target energy storage module is at least one module among the energy storage modulesSMₙ. The target energy storage module may be specified by the operation and maintenance staff through the control system, or may be SMₙrandomly determined by the valve control system from the energy storage modules, or may be determined by the valve control system based on a bus voltage and the charging voltage, which is not limited in this embodiment.

Further, the valve control system controls the battery pack of the target energy storage module of the energy storage system to be connected to the energy storage system based on the charging voltage. For example, the target energy storage module is the SM1 and SM2 in FIG. 1, and the valve control system only connects battery packs of the SM1 and SM2 to the energy storage system based on the charging voltage. An implementable mode is to connect the battery packs of the SM1 and SM2 to the energy storage system when capacitor voltages of the power units of the SM1 and SM2 are equal to the charging voltage.

The method for connection control provided in the present application acquires first voltages of battery packs of energy storage modules of an energy storage system; determines, based on the first voltages of the battery packs and a rated voltage value of a power unit of each of the energy storage modules, a charging voltage of each of the power units; and controls a battery pack of a target energy storage module of the energy storage system to be connected to the energy storage system based on the charging voltage. In the present application, based on a first voltage of each battery pack and a rated voltage value of a power unit of each energy storage module, a charging voltage of each power unit can be determined, and the first voltage of the battery pack is equivalent to an actual voltage of each battery pack. Therefore, the actual voltage of each battery pack and the rated voltage value of the power unit of each energy storage module are comprehensively considered for the charging voltage of each power unit, and then when a battery pack of a target energy storage module of an energy storage system is controlled to be connected to the energy storage system based on the charging voltage, the actual voltage of each battery pack matches the charging voltage of the power unit of each energy storage module. Therefore, the present application avoids the problem of impacting and damaging the battery pack in a process of connecting the battery pack because the actual voltage of the battery pack mismatches the rated voltage value of the power unit in a current process of connecting the battery pack, and avoids damaging the battery pack in the process of connecting the battery pack.

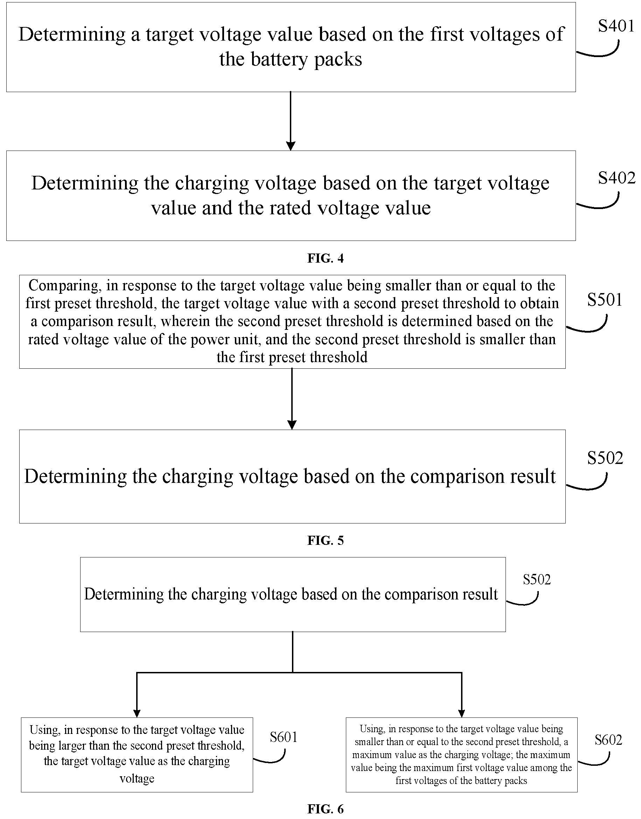

FIG. 4 is a schematic flowchart of determining a charging voltage in an embodiment of the present application. Referring to FIG. 4, this embodiment relates to an optional implementation of how to determine the charging voltage. Based on the above embodiments, the above S302: determining, based on the first voltages of the battery packs and the rated voltage value of the power unit of each of the energy storage modules, the charging voltage of each of the power units includes the following steps:
S401: determining a target voltage value based on the first voltages of the battery packs.

In this embodiment, the valve control system determines the target voltage value based on the first voltages of the battery packs, for example, uses a median of the first voltages of the battery packs as the target voltage value, which is not limited in this embodiment. The target voltage value is a reference voltage value determined by the valve control system based on the first voltages of the battery packs, that is to say, the target voltage value is a reference voltage value determined based on actual voltages of the battery packs before they are connected to the energy storage system, and then the valve control system can determine the charging voltage based on the target voltage value and the rated voltage value of the power unit.

S402: determining the charging voltage based on the target voltage value and the rated voltage value.

In this embodiment, the valve control system determines the charging voltage based on the target voltage value and the rated voltage value of the power unit of each energy storage module. For example, the valve control system compares the target voltage value with the rated voltage value of the power unit of each energy storage module. If a difference value between the target voltage value and the rated voltage value of each power unit is larger than a preset difference threshold, the target voltage value is used as the charging voltage of each power unit. In other words, if the target voltage value is not greatly different from the rated voltage value, the valve control system directly uses the rated voltage value of each power unit as the charging voltage; while if the target voltage value is greatly different from the rated voltage value, the valve control system uses the target voltage value as the charging voltage. Therefore, when the battery pack of the target energy storage module of the energy storage system is connected to the energy storage system, the charging voltage matches the actual voltage of the battery pack.

In this embodiment, the target voltage value is determined based on the first voltages of the battery packs, and then the charging voltage is determined based on the target voltage value and the rated voltage value. Since the target voltage value is first determined based on the first voltages of the battery packs, the charging voltage matching the actual voltages of the battery packs can be determined only based on the target voltage value and the rated voltage value, so that the valve control system can control the battery pack of the target energy storage module of the energy storage system to be connected to the energy storage system based on the charging voltage. In this way, in the process of connecting the battery pack to the energy storage system, not only is the safety in the process of connecting the battery pack improved, but also the connection efficiency of the connection process is improved.

Optionally, the above S401: determining the target voltage value based on the first voltages of the battery packs may be implemented by:
determining an average or minimum value of the first voltages of the battery packs as the target voltage value.

In this embodiment, the valve control system determines the average or minimum value of the first voltages of the battery packs as the target voltage value. For example, in each control cycle, the valve control system ranks first voltages of battery packs corresponding to energy storage modules SM1-SMn to obtain the minimum value and a maximum value, and uses the minimum value of the first voltages of the battery packs as the target voltage value; or, the valve control system determines the average value of the first voltages of the battery packs corresponding to the energy storage modules SM1-SMn, rounds the average value of the first voltages of the battery packs, and uses the rounded average value of the first voltages of the battery packs as the target voltage value. Of course, the valve control system may also directly use the average value of the first voltages of the battery packs corresponding to the energy storage modules SM1-SMn as the target voltage value.

In this embodiment, the average or minimum value of the first voltages of the battery packs is determined as the target voltage value. Therefore, when the charging voltage is determined based on the target voltage value and the rated voltage value, the actual voltages of the battery packs of the energy storage modules are considered, so that when the battery pack of the target energy storage module of the energy storage system is controlled to be connected to the energy storage system based on the charging voltage, the actual voltage of each battery pack matches the charging voltage of the power unit of each energy storage module, thereby avoiding damaging the battery pack in the process of connecting the battery pack, and improving the service life and safety of the battery pack.

Optionally, the above S402: determining the charging voltage based on the target voltage value and the rated voltage value may be implemented by:
using, in response to the target voltage value being larger than a first preset threshold, the rated voltage value as the charging voltage, the first preset threshold being determined based on the rated voltage value.

In this embodiment, the first preset threshold is determined based on the rated voltage value, for example, a first coefficient multiplied by the rated voltage value, and the first coefficient is a number larger than 0 and smaller than 1. Assuming that the rated voltage value is 200 V and the first coefficient is 0.9, the first preset threshold is 180 V.

Further, if the target voltage value is larger than the first preset threshold, the valve control system uses the rated voltage value as the charging voltage. For example, the target voltage value is the average value of the first voltages of the battery packs. If the average value of the first voltages of the battery packs is larger than the first preset threshold, the valve control system uses the rated voltage value as the charging voltage.

In this embodiment, if the target voltage value is larger than the first preset threshold, the rated voltage value is used as the charging voltage. Since the first preset threshold is determined based on the rated voltage value, and when the target voltage value is larger than the rated voltage value within a certain range, the rated voltage value of the power unit is used as the charging voltage, the first voltages of the battery packs match the charging voltage of the power unit in the process of connecting the battery pack, thereby avoiding damaging the battery pack in the process of connecting the battery pack.

FIG. 5 is a schematic flowchart of determining a charging voltage in an embodiment of the present application. Referring to FIG. 5, this embodiment relates to an optional implementation of how to determine the charging voltage. Based on the above embodiments, the above method for connection control further includes the following steps:
S501: comparing, in response to the target voltage value being smaller than or equal to the first preset threshold, the target voltage value with a second preset threshold to obtain a comparison result, wherein the second preset threshold is determined based on the rated voltage value of the power unit, and the second preset threshold is smaller than the first preset threshold.

In this embodiment, the second preset threshold is also determined based on the rated voltage value of the power unit, and the second preset threshold is smaller than the first preset threshold. For example, the second preset threshold is a second coefficient multiplied by the rated voltage value, the second coefficient is a number larger than 0 and smaller than 1, and the second coefficient is smaller than the first coefficient. Assuming that the rated voltage value is 200 V and the second coefficient is 0.8, the second preset threshold is 160 V.

Further, if the target voltage value is smaller than or equal to the first preset threshold, the valve control system compares the target voltage value with the second preset threshold to obtain a comparison result. For example, the target voltage value is the average value of the first voltages of the battery packs. When the target voltage value is smaller than or equal to the first preset threshold, the valve control system compares the average value of the first voltages of the battery packs with the second preset threshold, to obtain the comparison result.

S502: determining the charging voltage based on the comparison result.

In this embodiment, after determining the comparison result between the average value of the first voltages of the battery packs and the second preset threshold, the valve control system can determine the charging voltage based on the comparison result. For example, when the comparison result shows that the average value of the first voltages of the battery packs is larger than the second preset threshold, the valve control system may use the average value of the first voltages of the battery packs as the charging voltage.

In this embodiment, if the target voltage value is smaller than or equal to the first preset threshold, the target voltage value is compared with the second preset threshold to obtain the comparison result, and then the charging voltage is determined based on the comparison result. Since the second preset threshold is determined based on the rated voltage value of the power unit, and the second preset threshold is smaller than the first preset threshold, the valve control system compares the target voltage value with the second preset threshold to obtain the comparison result. If the comparison result is that the target voltage value is smaller than the second preset threshold, it means that there is a relatively large difference between the target voltage value and the rated voltage value. In this case, the maximum value of the first voltages of the battery packs may be used as the charging voltage, thereby quickly narrowing the difference between the target voltage value and the rated voltage value, ensuring that the first voltages match the charging voltage of the power unit in the process of connecting the battery pack, and avoiding damaging the battery pack in the process of connecting the battery pack.

FIG. 6 is another schematic flowchart of determining a charging voltage in an embodiment of the present application. Referring to FIG. 6, this embodiment relates to an optional implementation of how to determine the charging voltage. Based on the above embodiments, the above S502: determining the charging voltage based on the comparison result includes the following steps:
S601: using, in response to the target voltage value being larger than the second preset threshold, the target voltage value as the charging voltage.

In this embodiment, based on the comparison result between the target voltage value and the second preset threshold, if the target voltage value is larger than the second preset threshold, the valve control system uses the target voltage value as the charging voltage. For example, the target voltage value is the average value of the first voltages of the battery packs, and when the comparison result shows that the average value of the first voltages of the battery packs is larger than the second preset threshold, the valve control system may use the average value of the first voltages of the battery packs as the charging voltage.

S602: using, in response to the target voltage value being smaller than or equal to the second preset threshold, a maximum value as the charging voltage; the maximum value being the maximum first voltage value among the first voltages of the battery packs.

In this embodiment, if the target voltage value is smaller than or equal to the second preset threshold, the valve control system uses the maximum first voltage value among the first voltages of the battery packs as the charging voltage. For example, the target voltage value is the average value of the first voltages of the battery packs. When the comparison result shows that the average value of the first voltages of the battery packs is smaller than or equal to the second preset threshold, the valve control system may use the maximum first voltage value among the first voltages of the battery packs as the charging voltage.

The second preset threshold is smaller than the first preset threshold. When the target voltage value is smaller than or equal to the second preset threshold, it means that there is a large difference between the target voltage value and the rated voltage value of the power unit, and the target voltage value is smaller than the rated voltage value of the power unit. Therefore, in order to make the charging voltage approach the rated voltage value of the power unit, the valve control system uses the maximum first voltage value among the first voltages of the battery packs as the charging voltage, thereby reducing the difference between the charging voltage of the battery pack and the rated voltage value of the power unit.

In this embodiment, if the target voltage value is larger than the second preset threshold, the target voltage value is used as the charging voltage, while if the target voltage value is smaller than or equal to the second preset threshold, the maximum first voltage value among the first voltages of the battery packs is used as the charging voltage. The second preset threshold is determined based on the rated voltage value of the power unit, and when the target voltage value is larger than the second preset threshold value, the target voltage value is used as the charging voltage, thereby avoiding connecting the battery pack when the actual voltage of the battery pack is smaller than the rated voltage value of the power unit. Further, if the target voltage value is smaller than or equal to the second preset threshold, the maximum first voltage value among the first voltages of the battery packs is used as the charging voltage, so that the actual voltage of the battery pack matches the charging voltage of the power unit as much as possible, thereby avoiding damaging the battery pack in the process of connecting the battery pack.

It is understandable that when the target voltage value is the average value of the first voltages of the battery packs, the charging voltage determined by the valve control system by integrating the first voltages of the battery packs is not greatly different from the actual voltage of the battery pack. When the target voltage value is the minimum first voltage value among the first voltages of the battery packs, the risk of connecting a battery pack corresponding to the minimum first voltage is greatest, and the valve control system uses the minimum first voltage value among the first voltages of the battery packs as the target voltage value, thereby further avoiding damaging the battery pack corresponding to the minimum first voltage when the battery pack is connected.

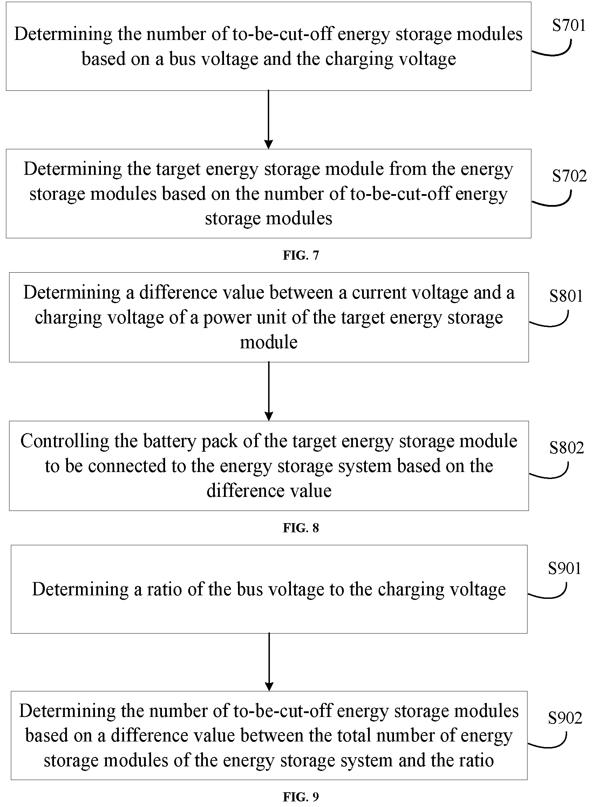

FIG. 7 is a schematic flowchart of determining a target energy storage module in an embodiment of the present application. Referring to FIG. 7, this embodiment relates to an optional implementation of how to determine the target energy storage module. Based on the above embodiments, the above method for connection control further includes the following steps:
S701: determining the number of to-be-cut-off energy storage modules based on a bus voltage and the charging voltage.

In this embodiment, after the valve control system determines the charging voltage of each power unit based on the first voltages of the battery packs and the rated voltage value of the power unit of each energy storage module, it is necessary to determine the number of to-be-cut-off energy storage modules, thereby determining the target energy storage module. Since the charging voltage of each energy storage module determined by the valve control system is identical, the valve control system can directly determine the number of to-be-cut-off energy storage modules based on the bus voltage and the charging voltage. An implementable mode is that after determining the charging voltage, the valve control system directly determines the number of to-be-cut-off energy storage modules based on the bus voltage and the charging voltage.

Specifically, since the energy storage modules SMₙof the energy storage system are connected in series, the energy storage modules will divide the bus voltage. Therefore, the valve control system determines the number of modules of each energy storage system that should work based on the bus voltage and the charging voltage, thereby determining the number of to-be-cut-off energy storage modules.

The determining the number of to-be-cut-off energy storage modules may be implemented in the following mode:
an implementable mode is that the valve control system determines a ratio of the bus voltage to the charging voltage, rounds up the ratio if the ratio is not an integer, to obtain a new ratio, and then uses a difference value obtained by subtracting the new ratio from the total number of energy storage modulesSMₙ as the number of to-be-cut-off energy storage modules.

Another implementable mode is that the valve control system determines the ratio of the bus voltage to the charging voltage, rounds down the ratio if the ratio is not an integer, to obtain a new ratio, and then uses a difference value obtained by subtracting the new ratio from the total number of energy storage modulesSMₙ as the number of to-be-cut-off energy storage modules.

S702: determining the target energy storage module from the energy storage modules based on the number of to-be-cut-off energy storage modules.

In this embodiment, the valve control system determines the target energy storage module from the energy storage modules based on the number of to-be-cut-off energy storage modules. The valve control system can randomly determine the target energy storage module based on the number of to-be-cut-off energy storage modules, or determine the target energy storage module in sequence based on the number of to-be-cut-off energy storage modules. Of course, the valve control system may also preset cutoff priorities for the energy storage modules, and then determine the target energy storage module based on the number of to-be-cut-off energy storage modules and the cutoff priorities. For example, with reference to FIG. 1, n=5, and the number of to-be-cut-off energy storage modules is 2, so that the valve control system determines to cut off SM4 and SM5 based on the cutoff priorities, and the target energy storage module is the SM1, SM2, and SM3. It is understandable that cutting off an energy storage module means to cut off a power unit of the energy storage module.

Further, the valve control system controls the battery packs of the SM1, SM2, and SM3 to be connected to the energy storage system based on the charging voltage.

In this embodiment, the number of to-be-cut-off energy storage modules is determined based on the bus voltage and the charging voltage, and then the target energy storage module is determined from the energy storage modules based on the number of to-be-cut-off energy storage modules. Since the target energy storage module is determined based on the bus voltage and the charging voltage, the target energy storage module is a module satisfying battery pack connection requirements, and then the battery pack of the target energy storage module of the energy storage system can be controlled to be connected to the energy storage system based on the charging voltage.

FIG. 8 is a schematic flowchart of connecting a battery pack in an embodiment of the present application. Referring to FIG. 8, this embodiment relates to an optional implementation of how to control the battery pack of the target energy storage module to be connected to the energy storage system. Based on the above embodiments, the above S303: controlling the battery pack of the target energy storage module of the energy storage system to be connected to the energy storage system based on the charging voltage includes the following steps:
S801: determining a difference value between a current voltage and a charging voltage of a power unit of the target energy storage module.

In this embodiment, after the valve control system successfully stores the first voltages of the battery packs, the valve control system will return an acknowledgment signal to the power unit controller. After the power unit controller receives the acknowledgment signal, the power unit controller will send the current voltage of the power unit to the valve control at a certain frequency. For example, the power unit controller sends the current voltage of the power unit to the valve control system every 10 seconds. The current voltage of the power unit is a current voltage of a capacitor of the power unit, such as a current voltage of the capacitor 207 in FIG. 2.

It is understandable that after the target energy storage module is determined, the current voltage of the power unit of the target energy storage module, that is, the current voltage of the capacitor of the power unit, will gradually increase, until the current voltage of the power unit of the energy storage module reaches or approaches the charging voltage. Since the charging voltage of the power unit is a voltage value that the voltage of the power unit is expected to reach, the valve control system will determine the difference value between the current voltage and the charging voltage of the power unit of the target energy storage module. Specifically, the valve control system can determine the difference value between the current voltage and the charging voltage of the power unit of the target energy storage module once every second.

S802: controlling the battery pack of the target energy storage module to be connected to the energy storage system based on the difference value.

In this embodiment, after determining the difference value between the current voltage and the charging voltage of the power unit of the target energy storage module, the valve control system can directly control the battery pack of the target energy storage module to be connected to the energy storage system based on the difference value. For example, when a ratio of the difference value to a third preset threshold is equal to 1, it means that the current voltage of the power unit has reached the charging voltage, that is, the current voltage of the capacitor of the power unit has reached the charging voltage, and then the valve control system directly controls the battery pack of the target energy storage module to be connected to the energy storage system.

In this embodiment, the difference value between the current voltage and the charging voltage of the power unit of the target energy storage module is determined, and the battery pack of the target energy storage module is controlled to be connected to the energy storage system based on the difference value. Since the battery pack of the target energy storage module is controlled to be connected to the energy storage system based on the difference between the current voltage and the charging voltage of the power unit, and the charging voltage is determined based on the first voltages and the rated voltage value, the actual voltage of each battery pack matches the charging voltage of the power unit of each energy storage module, so that when the battery pack of the target energy storage module is connected to the energy storage system, it will not impact the battery pack.

Optionally, the above S801: determining the difference value between the current voltage and the charging voltage of the power unit of the target energy storage module may be implemented by:
sending, in response to the difference value being smaller than a third preset threshold, a connection instruction to a control system; the connection instruction being used to instruct the battery pack of the target energy storage module to be connected to the energy storage system.

In this embodiment, if the difference value between the current voltage and the charging voltage of the power unit of the target energy storage module is smaller than the third preset threshold, the valve control system sends the connection instruction to the control system to connect the battery pack of the target energy storage module to the energy storage system. The third preset threshold may be set based on experience, for example, 0.1.

Specifically, after the valve control system sends the connection instruction to the control system, the control system can, after determining that the energy storage system does not have an alarm or abnormal failure, issue a battery pack connection command to the energy storage valve control system, and then control the precharging circuit of the target energy storage module to connect the battery pack of the target energy storage module to the energy storage system. In this embodiment, when the difference value between the current voltage and the charging voltage is smaller than the third preset threshold, the valve control system does not directly instruct the battery pack of the target energy storage module to be connected to the energy storage system, but connects the battery pack of the target energy storage module to the energy storage system only after issuing a connection instruction through the control system, thereby avoiding connecting the battery pack when the energy storage system is abnormal, and improving the safety of the battery pack connection.

In this embodiment, if the difference value is smaller than the third preset threshold, the connection instruction is sent to the control system; the connection instruction being used to instruct the battery pack of the target energy storage module to be connected to the energy storage system. When the difference value between the current voltage and the charging voltage of the power unit of the target energy storage module is smaller than the third preset threshold, it means that the current voltage of the power unit is close enough to the charging voltage. In this case, the battery pack of the target energy storage module is connected to the energy storage system, which can avoid connecting the battery pack when the actual voltage of the battery pack is smaller than the rated voltage value of the power unit, thus improving the safety of the battery pack. Moreover, the process of connecting the battery pack is controlled by the valve control system and the control system without manual operations, thereby improving the efficiency and intelligence of the battery pack connection.

Optionally, the above S701: determining the number of to-be-cut-off energy storage modules based on the bus voltage and the charging voltage may be implemented by:
determining, in response to receiving a controlled charging instruction sent by the control system, the number of to-be-cut-off energy storage modules based on the bus voltage and the charging voltage.

In this embodiment, after determining the charging voltage, the valve control system further needs to receive an instruction from the control system to allow controlled charging, and then can determine the number of to-be-cut-off energy storage modules based on the bus voltage and the charging voltage, which is the same as that of S701, and will not be repeated here.

In this embodiment, when the controlled charging instruction sent by the control system is received, the number of to-be-cut-off energy storage modules is determined based on the bus voltage and the charging voltage, thereby further improving the safety and intelligence in the process of connecting the battery pack.

FIG. 9 is a schematic flowchart of determining the number of cutoffs in an embodiment of the present application. Referring to FIG. 9, this embodiment relates to an optional implementation of how to determine the number of cutoffs. Based on the above embodiments, the above S701: determining the number of to-be-cut-off energy storage modules based on the bus voltage and the charging voltage further includes the following steps:
S901: determining a ratio of the bus voltage to the charging voltage.

In this embodiment, the charging voltage determined by the valve control system is *Uₛₑₜ*, and the bus voltage in the power transmission line, that is, the voltage between the positive DC bus and the negative DC bus in FIG. 1 is *U_{dac}.* Then, the valve control system determines a ratio of *U_{dac}*/*Uₛₑₜ* based on the bus voltage *U_{dac}* and the charging voltage *Uₛₑₜ*, thereby determining the number of modules of each energy storage system that should work.

S902: determining the number of to-be-cut-off energy storage modules based on a difference value between the total number of energy storage modules of the energy storage system and the ratio.

In this embodiment, the valve control system can determine the number of to-be-cut-off energy storage modules by subtracting *U_{dac}*/*Uₛₑₜ* from the total number n of energy storage modules. It should be noted that the determining the number of to-be-cut-off energy storage modules may also be implemented in the following manner:

The valve control system rounds up the difference value obtained by subtracting *U_{dac}*/*Uₛₑₜ* from the total number n, and uses the result as the number of to-be-cut-off energy storage modules.

In this embodiment, the ratio of the bus voltage to the charging voltage is determined, and the number of to-be-cut-off energy storage modules is determined based on the difference value between the total number of energy storage modules of the energy storage system and the ratio. Therefore, the target energy storage module is a module satisfying battery pack connection requirements, and then the battery pack of the target energy storage module of the energy storage system can be controlled to be connected to the energy storage system based on the charging voltage.

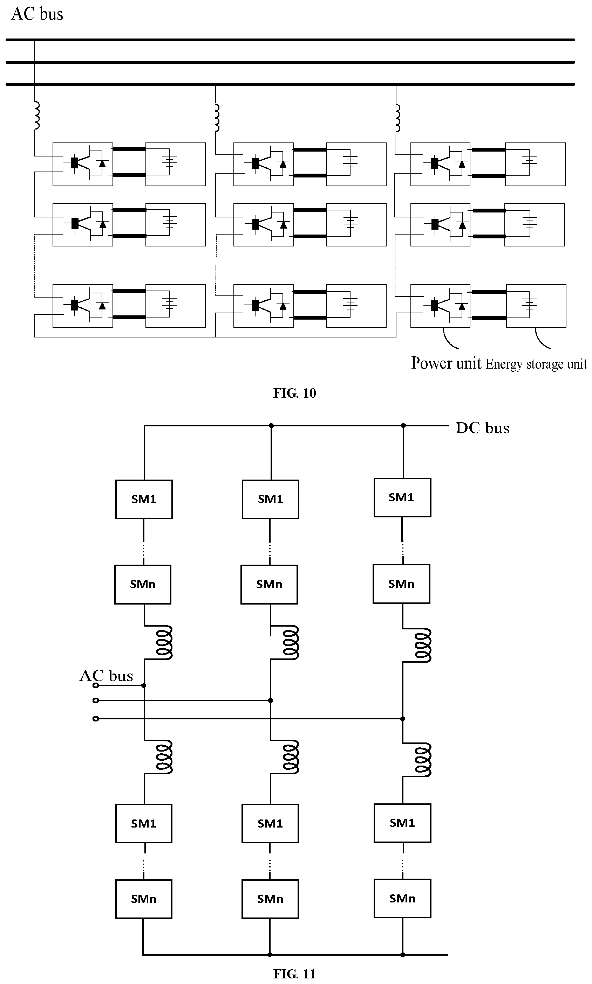

The above description is provided when the method for connection control is applied to a DC high-voltage direct-mounted energy storage system as an example. The method for connection control provided in the present application may also be applied to an AC high-voltage direct-mounted energy storage system and a hybrid AC/DC high-voltage direct-mounted energy storage system, as shown in FIGS. 10 and 11. FIG. 10 is a schematic diagram of an AC high-voltage direct-mounted energy storage system, and FIG. 11 is a hybrid AC/DC high-voltage direct-mounted energy storage system.

As shown in FIG. 10, in the AC high-voltage direct-mounted energy storage system, each phase of the AC bus is connected in series with cascaded energy storage modules, and the number of cascaded energy storage modules can still be configured based on the voltage level and capacity of the AC high-voltage direct-mounted energy storage system. Different from the above application to the DC high-voltage direct-mounted energy storage system, when a switch on the AC side is switched on, the valve control system directly performs uncontrolled charging on the cascade modules of each phase, and the number of to-be-cut-off energy storage modules determined by the valve control system is different. In the AC high-voltage direct-mounted energy storage system, the number of to-be-cut-off energy storage modules is obtained by subtracting a ratio of the AC phase voltage divided by the charging voltage from the total number of energy storage modules of the AC high-voltage direct-mounted energy storage system.

As shown in FIG. 11, in the hybrid AC/DC high-voltage direct-mounted energy storage system, the valve control system can distinguish whether current operation is in the DC starting mode or the AC starting mode based on the instruction from the control system. Then, the valve control system sets different cutoff rates and numbers of cutoffs for AC and DC respectively.

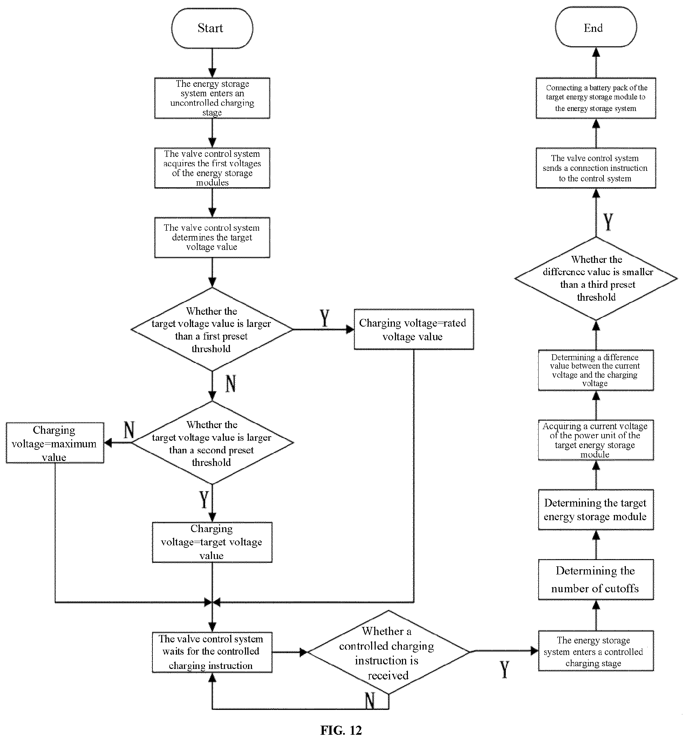

In order to explain the method for connection control provided in the present application more clearly, the description is provided here with reference to FIG. 12. FIG. 12 is a whole schematic flowchart of a method for connection control in the present application. As shown in FIG. 12, after the circuit breaker is switched on, and the isolation switch of the energy storage system is switched on, the energy storage system enters an uncontrolled charging stage. In the uncontrolled charging stage, the valve control system sends a blocking command to the power unit controller to block the power module. Under the control of the valve control system, the battery control systems of the energy storage module acquire the first voltages of the battery packs, and send the first voltages to the power unit controller, and the power unit controller forwards the first voltages to the valve control system, so that the valve control system acquires the first voltages of the energy storage modules. Then, the valve control system determines the target voltage value based on the first voltages of the battery packs.

Further, the rated voltage value of the power unit of each energy storage module is identical, and has been stored in the valve control system. The valve control system determines the charging voltage of each power unit based on the first voltage of each battery pack and the rated voltage value of the power unit of each energy storage module. Specifically, the target voltage value is an average value of the first voltages of the battery packs as an example. If the average value of the first voltages of the battery packs is larger than the first preset threshold, the valve control system uses the rated voltage value as the charging voltage, while if the average value of the first voltages of the battery packs is smaller than or equal to the first preset threshold, the target voltage value is compared with the second preset threshold. If the average value of the first voltages of the battery packs is larger than the second preset threshold, the average value of the first voltages of the battery packs is used as the charging voltage, while if the average value of the first voltages of the battery packs is smaller than or equal to the second preset threshold, the maximum first voltage value among the first voltages of the battery packs is used as the charging voltage.

After determining the charging voltage, the valve control system will wait for the controlled charging instruction from the control system. After the valve control system receives the controlled charging instruction from the control system, the energy storage system enters a controlled charging stage, during which the valve control system will issue a block or cutoff to each power unit controller. Specifically, the valve control system first determines the ratio of the bus voltage to the charging voltage, determines the number of to-be-cut-off energy storage modules based on the difference value between the total number of energy storage modules of the energy storage system and the ratio, and then determines the target energy storage module from the energy storage modules based on the number of to-be-cut-off energy storage modules. For example, the valve control system issues a cutoff command to each to-be-cut-off energy storage module, that is, non-target energy storage module, and then the power unit of the to-be-cut-off energy storage module receives the cutoff command and controls a corresponding power unit to cut off the to-be-cut-off energy storage module.

Still further, the valve control system periodically acquires the current voltage of the power unit of the target energy storage module, determines the difference value between the current voltage and the charging voltage of the power unit of the target energy storage module, and then issues a connection instruction to the control system if the difference value is smaller than the third preset threshold, wherein the connection instruction is used to instruct the battery pack of the target energy storage module to be connected to the energy storage system. After the battery pack is connected to the energy storage system, the valve control system will return a charging completion signal to the control system and wait for the energy storage system to be unlocked. After receiving the connection command, the battery control system first controls the switch S1 to be switched on, determines that the charging current is within an allowable range after a certain period of time, and then controls the switch S1 to be switched on, so that the switch S2 is switched on to connect the battery pack.

It should be noted that the power unit controller can acquire the first voltages of the battery packs and the current voltage of the power unit in parallel to the valve control system. Similarly, the valve control system can also acquire the first voltages of the battery packs and the current voltage of the power unit in parallel to the valve control system, and automatically store them separately.

Further, after the battery pack is connected to the energy storage system, if the charging voltage deviates from the rated voltage value of the power unit within a certain range, the valve control system can further adjust the number of cutoffs, so that the current voltage of the power unit increases to the rated voltage of the power unit, thereby reducing the impact at a moment when the energy storage system is unlocked.

To sum up, according to the method for connection control provided in the present application, the valve control system can adaptively and dynamically adjust the charging voltage at a moment when the battery pack is connected, and reduce the electrical impact when the battery pack is connected. Moreover, the entire process of connecting the battery pack automatically interacts among all levels without manual operations, and reduces manual involvement in judgment, thereby achieving better flexibility and higher efficiency.

It should be understood that although the steps in the flowcharts involved in the above embodiments are shown in a sequence as indicated by the arrows, these steps are not necessarily executed in the sequence as indicated by the arrows. Unless explicitly stated herein, the execution of these steps is not strictly limited in sequence, and these steps may also be executed in other sequences. Further, at least some of the steps in the flowcharts involved in the embodiments as mentioned above may include a plurality of steps or a plurality of stages. These steps or stages are not necessarily executed at a same moment, but may be executed at different moments, and may not necessarily be executed sequentially in an execution sequence, but may be executed in turn or alternately with other steps or at least some sub-steps or stages of other steps.

Based on the same inventive concept, an embodiment of the present application further provides an apparatus for connection control configured to implement the method for connection control involved above. The problem-solving implementation solution provided by this apparatus is similar to the implementation solution disclosed in the above method. Therefore, the above definition of the method for connection control may be referred to for specific definition of the apparatus for connection control in one or more embodiments provided below, which will not be repeated here.

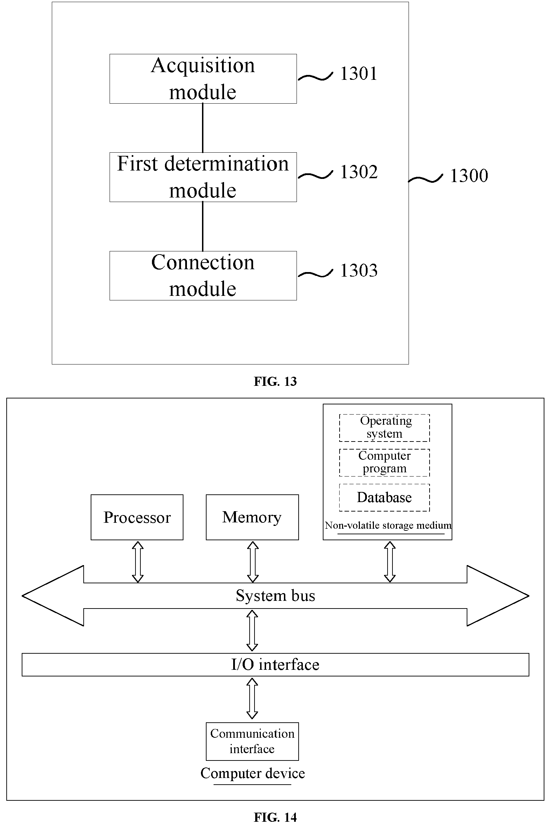

FIG. 13 is a structural block diagram of an apparatus for connection control in an embodiment of the present application. As shown in FIG. 13, an embodiment of the present application provides an apparatus 1300 for connection control, comprising: an acquisition module 1301, a first determination module 1302, and a connection module 1303, wherein:
the acquisition module 1301 is configured to acquire first voltages of battery packs of energy storage modules of an energy storage system;
the first determination module 1302 is configured to determine, based on the first voltages of the battery packs and a rated voltage value of a power unit of each of the energy storage modules, a charging voltage of each of the power units; and
the connection module 1303 is configured to control a battery pack of a target energy storage module of the energy storage system to be connected to the energy storage system based on the charging voltage.

The apparatus for connection control provided in the present application acquires first voltages of battery packs of energy storage modules of an energy storage system; determines, based on the first voltages of the battery packs and a rated voltage value of a power unit of each of the energy storage modules, a charging voltage of each of the power units; and controls a battery pack of a target energy storage module of the energy storage system to be connected to the energy storage system based on the charging voltage. In the present application, based on a first voltage of each battery pack and a rated voltage value of a power unit of each energy storage module, a charging voltage of each power unit can be determined, and the first voltage of the battery pack is equivalent to an actual voltage of each battery pack. Therefore, the actual voltage of each battery pack and the rated voltage value of the power unit of each energy storage module are comprehensively considered for the charging voltage of each power unit, and then when a battery pack of a target energy storage module of an energy storage system is controlled to be connected to the energy storage system based on the charging voltage, the actual voltage of each battery pack matches the charging voltage of the power unit of each energy storage module. Therefore, the present application avoids the problem of impacting and damaging the battery pack in a process of connecting the battery pack because the actual voltage of the battery pack mismatches the rated voltage value of the power unit in a current process of connecting the battery pack, and avoids damaging the battery pack in the process of connecting the battery pack.

Optionally, the first determination module 1302 comprises:
a first determination unit configured to determine a target voltage value based on the first voltages of the battery packs; and
a second determination unit configured to determine the charging voltage based on the target voltage value and the rated voltage value.

Optionally, the first determination unit is specifically configured to determine an average or minimum value of the first voltages of the battery packs as the target voltage value.

Optionally, the second determination unit is further configured to use, in response to the target voltage value being larger than a first preset threshold, the rated voltage value as the charging voltage; the first preset threshold being determined based on the rated voltage value.

Optionally, the apparatus 1300 for connection control further comprises:
a comparison module configured to compare, in response to the target voltage value being smaller than or equal to the first preset threshold, the target voltage value with a second preset threshold to obtain a comparison result, wherein the second preset threshold is determined based on the rated voltage value of the power unit, and the second preset threshold is smaller than the first preset threshold; and
a second determination module configured to determine the charging voltage based on the comparison result.

Optionally, the second determination module comprises:
a third determination unit configured to use, in response to the target voltage value being larger than the second preset threshold, the target voltage value as the charging voltage; and
a fourth determination unit configured to use, in response to the target voltage value being smaller than or equal to the second preset threshold, a maximum value as the charging voltage; the maximum value being the maximum first voltage value among the first voltages of the battery packs.

Optionally, the apparatus 1300 for connection control further comprises:
a third determination module configured to determine the number of to-be-cut-off energy storage modules based on a bus voltage and the charging voltage; and
a fourth determination module configured to determine the target energy storage module from the energy storage modules based on the number of to-be-cut-off energy storage modules.

Optionally, the connection module 1303 comprises:
a fifth determination unit configured to determine a difference value between a current voltage and the charging voltage of the power unit of the target energy storage module; and
a connection unit configured to control the battery pack of the target energy storage module to be connected to the energy storage system based on the difference value.

Optionally, the connection unit is specifically configured to send, in response to the difference value being smaller than a third preset threshold, a connection instruction to a control system; the connection instruction being used to instruct the battery pack of the target energy storage module to be connected to the energy storage system.

Optionally, the third determination module is further configured to determine, in response to receiving a controlled charging instruction sent by the control system, the number of to-be-cut-off energy storage modules based on the bus voltage and the charging voltage.

Optionally, the third determination module further comprises:
a sixth determination unit configured to determine a ratio of the bus voltage to the charging voltage; and
a seventh determination unit configured to determine the number of to-be-cut-off energy storage modules based on a difference value between the total number of energy storage modules of the energy storage system and the ratio.

The modules in the above apparatus for connection control may be implemented completely or partially by software, hardware, and a combination thereof. The above modules may be embedded in or independent of a processor of a computer device in the form of hardware, or may be stored in a memory of the computer device in the form of software, so that the processor can invoke the above modules and execute corresponding operations thereof.

FIG. 14 is an internal structural diagram of a computer device in an embodiment of the present application. In an embodiment of the present application, a computer device is provided. The computer device may be a server, and its internal structural diagram may be as shown in FIG. 14. The computer device comprises a processor, a memory, and a network interface that are connected through a system bus. The processor of the computer device is configured to provide computing power and control ability. The memory of the computer device comprises a non-volatile storage medium and a memory. The non-volatile storage medium stores an operating system, a computer program, and a database. This memory provides an environment for operations of the operating system and the computer program in the non-volatile storage medium. The database of the computer device is configured to store XX data. The network interface of the computer device is configured to communicate with an external terminal through a network connection. The computer program, when executed by the processor, implements a method for connection control.

Those skilled in the art can understand that the structure shown in FIG. 14 is only a block diagram of a part of structure related to the solutions of the present application, and does not constitute any limitation to the computer device to which the solutions of the present application are applied. A specific computer device may comprise more or fewer components than those shown in the figure, or may combine some components, or may have different component arrangements.

In an embodiment, a computer device is provided, comprising a memory and a processor, wherein the memory stores a computer program, and the processor, when executing the computer program, implements the following steps:
acquiring first voltages of battery packs of energy storage modules of an energy storage system;
determining, based on the first voltages of the battery packs and a rated voltage value of a power unit of each of the energy storage modules, a charging voltage of each of the power units; and
controlling a battery pack of a target energy storage module of the energy storage system to be connected to the energy storage system based on the charging voltage.

In an embodiment, the processor, when executing the computer program, further implements the following steps:
determining a target voltage value based on the first voltages of the battery packs; and
determining the charging voltage based on the target voltage value and the rated voltage value.

In an embodiment, the processor, when executing the computer program, further implements the following steps:
determining an average or minimum value of the first voltages of the battery packs as the target voltage value.

In an embodiment, the processor, when executing the computer program, further implements the following steps:
using, in response to the target voltage value being larger than a first preset threshold, the rated voltage value as the charging voltage; the first preset threshold being determined based on the rated voltage value.

In an embodiment, the processor, when executing the computer program, further implements the following steps:
comparing, in response to the target voltage value being smaller than or equal to the first preset threshold, the target voltage value with a second preset threshold to obtain a comparison result, wherein the second preset threshold is determined based on the rated voltage value of the power unit, and the second preset threshold is smaller than the first preset threshold; and
determining the charging voltage based on the comparison result.

In an embodiment, the processor, when executing the computer program, further implements the following steps:
using, in response to the target voltage value being larger than the second preset threshold, the target voltage value as the charging voltage; and
using, in response to the target voltage value being smaller than or equal to the second preset threshold, a maximum value as the charging voltage; the maximum value being the maximum first voltage value among the first voltages of the battery packs.

In an embodiment, the processor, when executing the computer program, further implements the following steps:
determining the number of to-be-cut-off energy storage modules based on a bus voltage and the charging voltage; and
determining the target energy storage module from the energy storage modules based on the number of to-be-cut-off energy storage modules.

In an embodiment, the processor, when executing the computer program, further implements the following steps:
determining a difference value between a current voltage and a charging voltage of a power unit of the target energy storage module; and
controlling the battery pack of the target energy storage module to be connected to the energy storage system based on the difference value.

In an embodiment, the processor, when executing the computer program, further implements the following steps:
sending, in response to the difference value being smaller than a third preset threshold, a connection instruction to a control system; the connection instruction being used to instruct the battery pack of the target energy storage module to be connected to the energy storage system.

In an embodiment, the processor, when executing the computer program, further implements the following steps:
determining, in response to receiving a controlled charging instruction sent by the control system, the number of to-be-cut-off energy storage modules based on the bus voltage and the charging voltage.

In an embodiment, the processor, when executing the computer program, further implements the following steps:
determining a ratio of the bus voltage to the charging voltage; and
determining the number of to-be-cut-off energy storage modules based on a difference value between the total number of energy storage modules of the energy storage system and the ratio.

In an embodiment, a computer-readable storage medium is provided, storing a computer program thereon, wherein the computer program, when executed by a processor, implements the following steps:
acquiring first voltages of battery packs of energy storage modules of an energy storage system;
determining, based on the first voltages of the battery packs and a rated voltage value of a power unit of each of the energy storage modules, a charging voltage of each of the power units; and
controlling a battery pack of a target energy storage module of the energy storage system to be connected to the energy storage system based on the charging voltage.

In an embodiment, the computer program, when executed by the processor, further implements the following steps:
determining a target voltage value based on the first voltages of the battery packs; and
determining the charging voltage based on the target voltage value and the rated voltage value.

In an embodiment, the computer program, when executed by the processor, further implements the following steps:
determining an average or minimum value of the first voltages of the battery packs as the target voltage value.

In an embodiment, the computer program, when executed by the processor, further implements the following steps:
using, in response to the target voltage value being larger than a first preset threshold, the rated voltage value as the charging voltage; the first preset threshold being determined based on the rated voltage value.

In an embodiment, the computer program, when executed by the processor, further implements the following steps:
comparing, in response to the target voltage value being smaller than or equal to the first preset threshold, the target voltage value with a second preset threshold to obtain a comparison result, wherein the second preset threshold is determined based on the rated voltage value of the power unit, and the second preset threshold is smaller than the first preset threshold; and
determining the charging voltage based on the comparison result.

In an embodiment, the computer program, when executed by the processor, further implements the following steps:
using, in response to the target voltage value being larger than the second preset threshold, the target voltage value as the charging voltage; and
using, in response to the target voltage value being smaller than or equal to the second preset threshold, a maximum value as the charging voltage; the maximum value being the maximum first voltage value among the first voltages of the battery packs.

In an embodiment, the computer program, when executed by the processor, further implements the following steps:
determining the number of to-be-cut-off energy storage modules based on a bus voltage and the charging voltage; and
determining the target energy storage module from the energy storage modules based on the number of to-be-cut-off energy storage modules.

In an embodiment, the computer program, when executed by the processor, further implements the following steps:
determining a difference value between a current voltage and a charging voltage of a power unit of the target energy storage module; and
controlling the battery pack of the target energy storage module to be connected to the energy storage system based on the difference value.

In an embodiment, the computer program, when executed by the processor, further implements the following steps:
sending, in response to the difference value being smaller than a third preset threshold, a connection instruction to a control system; the connection instruction being used to instruct the battery pack of the target energy storage module to be connected to the energy storage system.

In an embodiment, the computer program, when executed by the processor, further implements the following steps:
determining, in response to receiving a controlled charging instruction sent by the control system, the number of to-be-cut-off energy storage modules based on the bus voltage and the charging voltage.

In an embodiment, the computer program, when executed by the processor, further implements the following steps:
determining a ratio of the bus voltage to the charging voltage; and
determining the number of to-be-cut-off energy storage modules based on a difference value between the total number of energy storage modules of the energy storage system and the ratio.

In an embodiment, a computer program product is provided, comprising a computer program, wherein the computer program, when executed by a processor, implements the following steps:
acquiring first voltages of battery packs of energy storage modules of an energy storage system;
determining, based on the first voltages of the battery packs and a rated voltage value of a power unit of each of the energy storage modules, a charging voltage of each of the power units; and
controlling a battery pack of a target energy storage module of the energy storage system to be connected to the energy storage system based on the charging voltage.

In an embodiment, the computer program, when executed by the processor, further implements the following steps:
determining a target voltage value based on the first voltages of the battery packs; and
determining the charging voltage based on the target voltage value and the rated voltage value.

In an embodiment, the computer program, when executed by the processor, further implements the following steps:
determining an average or minimum value of the first voltages of the battery packs as the target voltage value.

In an embodiment, the computer program, when executed by the processor, further implements the following steps:
using, in response to the target voltage value being larger than a first preset threshold, the rated voltage value as the charging voltage; the first preset threshold being determined based on the rated voltage value.

In an embodiment, the computer program, when executed by the processor, further implements the following steps:
comparing, in response to the target voltage value being smaller than or equal to the first preset threshold, the target voltage value with a second preset threshold to obtain a comparison result, wherein the second preset threshold is determined based on the rated voltage value of the power unit, and the second preset threshold is smaller than the first preset threshold; and
determining the charging voltage based on the comparison result.

In an embodiment, the computer program, when executed by the processor, further implements the following steps:
using, in response to the target voltage value being larger than the second preset threshold, the target voltage value as the charging voltage; and
using, in response to the target voltage value being smaller than or equal to the second preset threshold, a maximum value as the charging voltage; the maximum value being the maximum first voltage value among the first voltages of the battery packs.

In an embodiment, the computer program, when executed by the processor, further implements the following steps:
determining the number of to-be-cut-off energy storage modules based on a bus voltage and the charging voltage; and
determining the target energy storage module from the energy storage modules based on the number of to-be-cut-off energy storage modules.

In an embodiment, the computer program, when executed by the processor, further implements the following steps:
determining a difference value between a current voltage and a charging voltage of a power unit of the target energy storage module; and
controlling the battery pack of the target energy storage module to be connected to the energy storage system based on the difference value.

In an embodiment, the computer program, when executed by the processor, further implements the following steps:
sending, in response to the difference value being smaller than a third preset threshold, a connection instruction to a control system; the connection instruction being used to instruct the battery pack of the target energy storage module to be connected to the energy storage system.

In an embodiment, the computer program, when executed by the processor, further implements the following steps:
determining, in response to receiving a controlled charging instruction sent by the control system, the number of to-be-cut-off energy storage modules based on the bus voltage and the charging voltage.

In an embodiment, the computer program, when executed by the processor, further implements the following steps:
determining a ratio of the bus voltage to the charging voltage; and
determining the number of to-be-cut-off energy storage modules based on a difference value between the total number of energy storage modules of the energy storage system and the ratio.

Those of ordinary skill in the art can understand that all or a part of the processes of implementation of the method in the above embodiments can be completed by instructing relevant hardware through the computer program. The computer program may be stored in a non-volatile computer-readable storage medium. The execution of the program may include the processes in the above method embodiments. Any reference to the memory, storage, database or other mediums used in the embodiments provided in the present application may include at least one of a non-volatile memory and a volatile memory. The non-volatile memory may include, e.g., a Read-Only Memory (ROM), a magnetic tape, a floppy disk, a flash memory, or an optical memory. The volatile memory may include a Random Access Memory (RAM) or an external cache memory. Illustratively and non-restrictively, the RAM may be in various forms, such as a Static Random Access Memory (SRAM) or a Dynamic Random Access Memory (DRAM).

The technical features of the above embodiments can be randomly combined. To simplify the description, not all possible combinations of the technical features of the above embodiments are described. However, as long as a combination of these technical features is not contradictory, the combination should be considered to be encompassed within the scope disclosed in the present specification.

The above embodiments merely represent some embodiments of the present application, giving specifics and details thereof, but should not be construed as limiting the scope of the invention patent thereby. It should be noted that a person of ordinary skill in the art may further make several alterations and improvements without departing from the concept of the present application, and these are all encompassed within the scope of protection of the present application. Therefore, the patent protection scope of the present application should be subject to the appended claims.

## Claims

1. A method for connection control, comprising:
acquiring first voltages of battery packs of energy storage modules of an energy storage system;
determining, based on the first voltages of the battery packs and a rated voltage value of a power unit of each of the energy storage modules, a charging voltage of each of the power units; and
controlling a battery pack of a target energy storage module of the energy storage system to be connected to the energy storage system based on the charging voltage.

2. The method according to claim 1, wherein the determining the charging voltage based on the first voltages of the battery packs and the rated voltage value of the power unit of the energy storage module comprises:
determining a target voltage value based on the first voltages of the battery packs; and
determining the charging voltage based on the target voltage value and the rated voltage value.

3. The method according to claim 2, wherein the determining the target voltage value based on the first voltages of the battery packs comprises:
determining an average or minimum value of the first voltages of the battery packs as the target voltage value.

4. The method according to claim 2 or 3, wherein the determining the charging voltage based on the target voltage value and the rated voltage value comprises:
using, in response to the target voltage value being larger than a first preset threshold, the rated voltage value as the charging voltage; the first preset threshold being determined based on the rated voltage value.

5. The method according to claim 4, wherein the method further comprises:
comparing, in response to the target voltage value being smaller than or equal to the first preset threshold, the target voltage value with a second preset threshold to obtain a comparison result, wherein the second preset threshold is determined based on the rated voltage value of the power unit, and the second preset threshold is smaller than the first preset threshold; and
determining the charging voltage based on the comparison result.

6. The method according to claim 5, wherein the determining the charging voltage based on the comparison result comprises:
using, in response to the target voltage value being larger than the second preset threshold, the target voltage value as the charging voltage; and
using, in response to the target voltage value being smaller than or equal to the second preset threshold, a maximum value as the charging voltage; the maximum value being the maximum first voltage value among the first voltages of the battery packs.

7. The method according to any one of claims 1-6, wherein the method further comprises:
determining the number of to-be-cut-off energy storage modules based on a bus voltage and the charging voltage; and
determining the target energy storage module from the energy storage modules based on the number of to-be-cut-off energy storage modules.

8. The method according to claim 7, wherein the controlling the battery pack of the target energy storage module of the energy storage system to be connected to the energy storage system based on the charging voltage comprises:
determining a difference value between a current voltage and the charging voltage of a power unit of the target energy storage module; and
controlling the battery pack of the target energy storage module to be connected to the energy storage system based on the difference value.

9. The method according to claim 8, wherein the controlling the battery pack of the target energy storage module to be connected to the energy storage system based on the difference value comprises:
sending, in response to the difference value being smaller than a third preset threshold, a connection instruction to a control system; the connection instruction being used to instruct the battery pack of the target energy storage module to be connected to the energy storage system.

10. The method according to any one of claims 7-9, wherein the determining the number of to-be-cut-off energy storage modules based on the bus voltage and the charging voltage comprises:
determining, in response to receiving a controlled charging instruction sent by a control system, the number of to-be-cut-off energy storage modules based on the bus voltage and the charging voltage.

11. The method according to any one of claims 8-10, wherein the determining the number of to-be-cut-off energy storage modules based on the bus voltage and the charging voltage comprises:
determining a ratio of the bus voltage to the charging voltage; and
determining the number of to-be-cut-off energy storage modules based on a difference value between the total number of energy storage modules of the energy storage system and the ratio.

12. An apparatus for connection control, comprising:
an acquisition module configured to acquire first voltages of battery packs of energy storage modules of an energy storage system;
a first determination module configured to determine, based on the first voltages of the battery packs and a rated voltage value of a power unit of each of the energy storage modules, a charging voltage of each of the power units; and
a connection module configured to control a battery pack of a target energy storage module of the energy storage system to be connected to the energy storage system based on the charging voltage.

13. A computer device, comprising a memory and a processor, the memory storing a computer program, wherein the processor, when executing the computer program, implements steps of the method according to any one of claims 1-11.

14. A computer-readable storage medium, storing a computer program thereon, wherein the computer program, when executed by a processor, implements steps of the method according to any one of claims 1-11.

15. A computer program product, comprising a computer program, wherein the computer program, when executed by a processor, implements steps of the method according to any one of claims 1-11.
